# EUROPÄISCHE PATENTANMELDUNG

(11) **EP 3 581 404 A1**
(43) Veröffentlichungstag der Anmeldung: **18.12.2019**
(21) Anmeldenummer: 18465531.4
(22) Anmeldetag: 13.06.2018
(51) Int. Cl.: B60C 23/04, B60C 19/00

(54) **SYSTEM ZUR ÜBERPRÜFUNG EINES REIFENTYPS EINES KRAFTFAHRZEUGREIFENS SOWIE EIN KRAFTFAHRZEUG MIT EINEM DERARTIGEN SYSTEM**

(71) Anmelder: Continental Automotive Romania SRL, 300704 Timisoara (RO)
(72) Erfinder: Oancea, Iulian, 707305 Miroslava, Iasi (RO); Oancea, Iulia, 707305 Miroslava, Iasi (RO)

(57) **Zusammenfassung**

Die Erfindung betrifft ein System (2) zur Auswertung von Reifentypdaten, aufweisend einen Sensor (4), und eine Verarbeitungseinheit (6); wobei der Sensor (4) zur Anordnung derart ausgebildet ist, so dass ein Sensorbereich (8) des Sensors (4) mindestens einen Teil eines Reifens (10) eines Kraftfahrzeugs (12) erfasst; wobei der Sensor (4) ausgebildet ist, Reifentypdaten per Funk von einer Datenvorrichtung (14) zu erfassen, die an dem Reifen (10) des Kraftfahrzeugs (12) befestigt und/oder in den Reifen (10) integriert ist, wobei die Reifentypdaten den Reifentyp des Reifens (10) repräsentieren; wobei die Verarbeitungseinheit (6) konfiguriert ist, die Reifentypendaten in Bezug zu Referenz-Reifentypdaten auszuwerten, wobei die Referenz-Reifentypdaten eine Reifentypanforderung repräsentieren; und wobei die Verarbeitungseinheit (6) konfiguriert ist, ein Arbeitssignal basierend auf einem Ergebnis der Auswertung zu erzeugen, und wobei das Arbeitssignal indiziert, ob der Reifentyp des Reifens (10) des Kraftfahrzeugs (12) die Reifentypanforderung erfüllt, die durch die Referenz-Reifentypdaten repräsentiert ist. Die Erfindung betrifft außerdem ein Fahrzeug (12) mit einem derartigen System (2).

## Beschreibung

Die Erfindung betrifft ein System, das zur Auswertung eines Reifentyps eines Kraftfahrzeugreifens dient sowie ein Kraftfahrzeug mit einem derartigen System.

Ein Kraftfahrzeug kann bei unterschiedlichen Wetterbedingungen verwendet werden. Ein Kraftfahrzeug ist vorzugsweise ein Auto. Das Kraftfahrzeug kann beispielsweise im Sommer bei Temperaturen oberhalb von 20 Grad verwendet werden. Es ist aber auch möglich, dass das Fahrzeug im Winter, wenn Temperaturen unterhalb des Gefrierpunkts vorliegen, verwendet wird. Aufgrund der hohen Außentemperaturunterschiede sind unterschiedliche Reifentypen erhältlich, die an die jeweilige Umweltsituation angepasst sind. So gibt es beispielsweise sogenannte Sommerreifen, die im Sommer an einem Kraftfahrzeug montiert sein können. Sinken die Temperaturen im Herbst oder im Winter, so werden oftmals sogenannte Winterreifen verwendet. Sommerreifen und Winterreifen sind jeweils ein Reifentyp eines Kraftfahrzeugreifens. Darüber hinaus gibt es noch weitere Reifentypen.

Um die Verwendung eines Kraftfahrzeugs insbesondere im Winter besonders sicher zu gestalten, gibt es in vielen Ländern gesetzliche Regelungen, die die Verwendung von Winterreifen während der Winterzeit des Jahres vorschreiben.

Der Erfindung liegt deshalb die Aufgabe zugrunde, ein System bzw. ein Kraftfahrzeug mit einem derartigen System vorzuschlagen, dass eine möglichst einfache Überprüfung eines Reifentyps eines Kraftfahrzeugreifens erlaubt.

Gemäß einem ersten Aspekt der Erfindung wird die Aufgabe gelöst durch ein System, das einen Sensor und eine Verarbeitungseinheit aufweist. Dabei ist der Sensor zur Anordnung derart ausgebildet, sodass ein Sensorbereich des Sensors mindestens einen Teil eines Reifens eines Kraftfahrzeugs erfasst. Der Sensor ist ausgebildet, Reifentypdaten per Funk von einer Datenvorrichtung zu erfassen, die an dem Reifen des Kraftfahrzeugs befestigt und/oder in den Reifen integriert ist, wobei die Reifentypdaten den Reifentyp des Reifens repräsentieren. Die Verarbeitungseinheit ist konfiguriert, die Reifentypdaten in Bezug zu Referenz-Reifentypdaten auszuwerten, wobei die Referenz-Reifentypdaten eine Reifentypanforderung repräsentieren. Außerdem ist die Verarbeitungseinheit konfiguriert, ein Arbeitssignal basierend auf einem Ergebnis der Auswertung zu erzeugen, wobei das Arbeitssignal indiziert, ob der Reifentyp des Reifens des Kraftfahrzeugs die Reifentypanforderung erfüllt, die durch die Referenz-Reifentypdaten repräsentiert ist.

Das System bietet den Vorteil, dass die einem Kraftfahrzeugreifen zugeordneten Reifentypdaten mit Referenz-Reifentypdaten verglichen und somit ausgewertet werden können, sodass basierend hierauf ein Arbeitssignal erzeugt wird, das zumindest indirekt angibt, ob der tatsächliche Reifentyp des Reifens des Kraftfahrzeugs die Anforderung an den Reifentyp erfüllt, wobei diese Anforderung von Referenz-Reifentypdaten repräsentiert ist. Die Reifentypanforderung kann beispielsweise bestimmen, dass der Reifentyp ein Winterreifen sein soll. Diese Reifentypanforderung kann sodann von Referenz-Reifentypdaten repräsentiert sein. Die Verarbeitungseinheit des Systems kann auf diese Referenz-Reifentypdaten zugreifen und/oder diese zuvor ermittelt bzw. bestimmt haben.

Der tatsächliche Reifentyp des Reifens eines Kraftfahrzeugs wird von Reifentypdaten repräsentiert, die von der Datenvorrichtung des Reifens zur Verfügung gestellt werden können. Diese Datenvorrichtung kann ein elektronisches Bauteil sein, das zur Speicherung der Reifentypdaten ausgebildet ist und/oder dazu ausgebildet ist, diese Reifentypdaten per Funk an einen Sensor zu übertragen. Dies wird von dem Sensor des Systems genutzt. Denn der Sensor des Systems ist ausgebildet, die Reifentypdaten per Funk von der Datenvorrichtung eines Reifens zu erfassen. Die Datenvorrichtung kann dabei grundsätzlich an einer beliebigen Stelle des Reifens befestigt sein und/oder zumindest teilweise in den Reifen integriert sein. Mit anderen Worten ist es bevorzugt vorgesehen, dass die Datenvorrichtung dem Reifen zugeordnet ist. Kommt die Datenvorrichtung in den Sensorbereich des Sensors, kann die Funkverbindung zwischen dem Sensor und der Datenvorrichtung hergestellt sein, wobei die Reifentypdaten über die Funkverbindung von der Datenvorrichtung an den Sensor übertragen werden. Der Sensor und die Verarbeitungseinheit des Systems können derart miteinander gekoppelt sein, dass die von dem Sensor erfassten Reifentypdaten an die Verarbeitungseinheit übertragen werden. Der Sensor und die Verarbeitungseinheit können getrennt ausgestaltet sein und/oder als eine integrierte Einheit ausgebildet sein. Stehen die Reifentypdaten der Verarbeitungseinheit zur Verfügung, so können die Reifentypdaten in Bezug zu Referenz-Reifentypdaten von der Verarbeitungseinheit ausgewertet werden. Hierzu ist die Verarbeitungseinheit entsprechend konfiguriert. Die Auswertung kann beispielsweise durch einen Vergleich der erfassten Reifentypdaten mit den Referenz-Reifentypdaten erfolgen. In diesem Fall kann ein Ergebnis der Auswertung sein, dass die erfassten Reifentypdaten einen Reifentyp repräsentieren, der mit der Reifentypanforderung übereinstimmt, die von den Referenz-Reifentypdaten repräsentiert ist. Das Ergebnis kann (alternativ) aber auch sein, dass der tatsächliche Reifentyp nicht mit der Reifentypanforderung übereinstimmt. Basierend auf dem jeweiligen Ergebnis kann die Verarbeitungseinheit ein Arbeitssignal erzeugen, das indiziert, ob der Reifentyp des Reifens des Kraftfahrzeugs die Reifentypanforderung erfüllt, oder nicht. Das Arbeitssignal kann beispielsweise einen Wert "wahr" oder "falsch" indizieren. Es ist aber auch möglich, dass das Arbeitssignal beispielsweise den Wert "erfüllt" oder den Wert "nicht erfüllt" indiziert. Grundsätzlich kann das Arbeitssignal beispielsweise derart verstanden werden, dass es angibt, ob der tatsächliche Reifentyp des Reifens des Kraftfahrzeugs die Reifentypanforderung, beispielsweise die Anforderung eines Winterreifens, erfüllt.

Mit dem System kann also ein Arbeitssignal erzeugt werden, das angeben kann, ob der tatsächliche Reifentyp der notwendigen oder gewünschten Reifentypanforderung für den tatsächlichen Reifen des Kraftfahrzeugs erfüllt. Aus dem Arbeitssignal kann also beispielsweise abgelesen werden, ob der Reifen eines Fahrzeugs tatsächlich ein Winterreifen ist, wenn dies gefordert ist.

Der Sensor des Systems ist vorzugsweise ein drahtloser Sensor oder ein schnurloser Sensor. Somit kann der Sensor ausgebildet sein, die Reifentypdaten per Funk, also vorzugsweise drahtlos bzw. schnurlos, von der Datenvorrichtung des Reifens zu erfassen. Um dies vorteilhaft zu gewährleisten, kann der Sensor ausgebildet sein, so angeordnet zu werden, insbesondere in dem Fahrzeug derart angeordnet zu werden, sodass ein Sensorbereich des Sensors einen Reifen des Kraftfahrzeugs erfasst. Dabei ist es bevorzugt vorgesehen, dass der Sensorbereich zumindest einen Teil des Reifens erfasst. Denn der Reifen bewegt sich für gewöhnlich in einer rotatorischen Bewegung, sodass die Erfassung eines Teils des Reifens ausreichen kann. Zumindest für einen begrenzten Zeitraum während einer Drehung durchfährt die Datenvorrichtung dieses Reifens währenddessen die Reifentypdaten mittels des Sensors per Funk von der Datenvorrichtung erfasst werden können.

Unter den Reifentypdaten können beispielsweise Daten verstanden werden, die einen Reifentyp eines Reifens repräsentieren. Der Reifentyp kann beispielsweise eines der folgenden bekannten Reifentypen sein: Winterreifen, Sommerreifen oder Ganzjahresreifen.

Eine vorteilhafte Ausgestaltung des Sensors zeichnet sich dadurch aus, dass der Sensor als ein RFID-Sensor ausgebildet ist. Korrespondierend dazu kann die Datenvorrichtung als eine RFID-Datenvorrichtung, insbesondere als ein sogenannter RFID-Tag, ausgebildet sein.

Grundsätzlich ist es jedoch möglich, dass insbesondere die Datenvorrichtung als eine andere identifizierbare Datenvorrichtung ausgebildet ist, die per Funk Reifentypdaten an den Sensor übertragen kann. Der Sensor kann in diesem Fall dazu ausgebildet sein, die identifizierbare Datenvorrichtung zu erfassen und mit dieser eine Funkverbindung aufzubauen, um die Reifentypdaten zu empfangen bzw. auszulesen.

Eine vorteilhafte Ausgestaltung des Systems zeichnet sich dadurch aus, dass die Verarbeitungseinheit konfiguriert ist, das Arbeitssignal derart zu erzeugen, dass das Arbeitssignal eine Warnung repräsentiert, wenn der Reifentyp des Reifens des Kraftfahrzeugs nicht der Reifentypanforderung genügt, die durch die Referenz-Reifentypdaten repräsentiert ist. Die Warnung kann dabei eine reifenbezogene und/oder reifentypspezifische Warnung sein. Das Arbeitssignal eignet sich also dazu, einen Fahrer eines Kraftfahrzeugs darüber aufmerksam zu machen, dass der tatsächliche Reifen an dem jeweiligen Kraftfahrzeug nicht der Anforderung im Hinblick an den Reifentyp genügt. Eine vorteilhafte Ausgestaltung des Systems zeichnet sich dadurch aus, dass die Verarbeitungseinheit konfiguriert ist, das Arbeitssignal an eine Steuereinheit des Kraftfahrzeugs zu senden. Die Verarbeitungseinheit kann dazu eine Signalübertragungsschnittstelle aufweisen. Auch die Steuereinheit des Kraftfahrzeugs kann eine entsprechende Signalübertragungsschnittstelle aufweisen. Sind diese beiden Schnittstellen über ein Signalverbindungskabel oder per Funk miteinander verbunden, so kann das Arbeitssignal von der Verarbeitungseinheit an die Steuereinheit übertragen werden. Die Steuereinheit des Kraftfahrzeugs kann zur Auswertung des Arbeitssignals ausgebildet sein. So kann die Steuereinheit des Kraftfahrzeugs dazu ausgebildet und/oder konfiguriert sein, eine Warnmeldung optisch und/oder akustisch im Fahrzeuginnenraum des Kraftfahrzeugs basierend auf dem Arbeitssignal auszugeben. Dies gilt insbesondere dann, wenn das Arbeitssignal eine Warnung repräsentiert. Außerdem kann die Steuereinheit derart ausgebildet und/oder konfiguriert sein, dass insbesondere die optische Ausgabe auch den jeweiligen Reifen des Kraftfahrzeugs angibt. So kann der Fahrer des Kraftfahrzeugs direkt darüber informiert werden, welche der Reifen des Kraftfahrzeugs nicht der Reifentypanforderung genügt.

Eine vorteilhafte Ausgestaltung des Systems zeichnet sich dadurch aus, dass die Referenz-Reifentypdaten von der Verarbeitungseinheit gespeichert, abrufbar und/oder vorbestimmt sind. Sofern die Referenz-Reifentypdaten von der Verarbeitungseinheit vorbestimmt sind, kann damit umfasst sein, dass die Referenz-Reifentypdaten von der Verarbeitungseinheit vorberechnet und/oder vorermittelt sind. Sofern die Referenz-Reifentypdaten von der Verarbeitungseinheit gespeichert sind, kann es vorgesehen sein, dass der Verarbeitungseinheit ein Datenspeicher zugeordnet ist, von dem die Referenz-Reifentypdaten gespeichert sind. Sofern die Referenz-Reifentypdaten von der Verarbeitungseinheit abrufbar sind, kann es vorgesehen sein, dass der Verarbeitungseinheit eine Datenübertragungsschnittstelle zugeordnet ist, mittels der die Referenz-Reifentypdaten abgerufen und/oder ausgelesen werden können. Mit der Datenübertragungsschnittstelle kann eine von der Verarbeitungseinheit getrennte Datenbereitstellungseinheit direkt oder indirekt gekoppelt sein. Von dieser Datenbereitstellungseinheit können die Referenz-Reifentypdaten zur Verfügung gestellt werden. Die Datenbereitstellungseinheit kann beispielsweise von einem Server, insbesondere einen Datenbankserver, gebildet sein.

Eine vorteilhafte Ausgestaltung des Systems zeichnet sich dadurch aus, dass die Verarbeitungseinheit konfiguriert ist, um die Referenz-Reifentypdaten mittels einer Anforderungsdatenbank zu bestimmen, wobei die Anforderungsdatenbank Reifentypanforderungen in Abhängigkeit von mindestens einem der folgenden Parameter repräsentiert: geographische Positionen, Uhrzeiten, Datumsangaben, Straßenzustände, Länder, Außentemperaturen und/oder Außenschneezustände. Die Anforderungsdatenbank kann auf einem der Verarbeitungseinheit zugeordneten Speicher gespeichert sein. Alternativ oder ergänzend kann es vorgesehen sein, dass die Anforderungsdatenbank über die Datenübertragungsschnittstelle der Verarbeitungseinheit abrufbar und/oder über diese darauf zugreifbar ist. So kann es beispielsweise vorgesehen sein, dass die Datenverarbeitungseinheit eine Netzwerkschnittstelle zu einem Server zugeordnet ist, so dass die Datenverarbeitungseinheit über das entsprechende Netzwerk Zugriff auf einen Server, insbesondere einen Datenbankserver, hat, von dem die Anforderungsdatenbank bereitgestellt wird. Somit ist es möglich, dass die Verarbeitungseinheit auf die Anforderungsdatenbank zugreifen kann. Außerdem ist es bevorzugt vorgesehen, dass die Referenz-Reifentypdaten von der Verarbeitungseinheit vorbestimmt sind. Dies kann mit Hilfe der Anforderungsdatenbank ausgeführt werden. Die Verarbeitungseinheit kann dazu entsprechend konfiguriert und/oder ausgebildet sein.

Die Anforderungsdatenbank repräsentiert Reifentypanforderungen beispielsweise in Abhängigkeit von Außentemperaturen. So kann die Anforderungsdatenbank beispielsweise für Temperaturen von 7 Grad Celsius bis -60 Grad Celsius Winterreifen als Reifentypanforderung repräsentieren. Für ein anderes Beispiel kann es beispielsweise vorgesehen sein, dass die Anforderungsdatenbank Winterreifen als Reifentypanforderung für Datumsangaben zwischen dem 1. November eines Jahres und dem 1. März eines Folgejahres repräsentiert. Neben den Außentemperaturen und den Datumsangaben wurden zuvor auch weitere mögliche Parameter genannt. Es ist deshalb grundsätzlich möglich, dass die Anforderungsdatenbank Reifentypanforderung in Abhängigkeit von beispielsweise zwei, drei oder noch weiteren Parametern repräsentiert, wie beispielsweise geographischen Positionen oder Ländern. In diesem Fall müssen sämtliche der zuvor genannten Parameter abgeglichen werden, um die entsprechende Reifentypanforderung mittels der Anforderungsdatenbank zu bestimmen. Hierzu kann die Verarbeitungseinheit entsprechend ausgebildet und/oder konfiguriert sein. Sofern die Reifentypanforderung mittels der Anforderungsdatenbank von der Verarbeitungseinheit bestimmt und/oder ermittelt ist, ist die Verarbeitungseinheit außerdem dazu konfiguriert, die entsprechenden Referenz-Reifentypdaten zu bestimmen, so dass die Referenz-Reifentypdaten die zuvor ermittelte Reifentypanforderung repräsentiert.

Unter geographischen Positionen können beispielsweise geographische Koordinaten, also beispielsweise geographische Breitenangaben und geographische Längenangaben, verstanden werden. Es ist jedoch auch möglich, dass unter geographischen Positionen Adressangaben, wie beispielsweise Angaben zur Straße, zur Hausnummer, zur Postleitzahl und/oder zur Stadt bzw. Ort zu verstehen sind. Unter Straßenzuständen können beispielsweise vorbestimmte Zustände verstanden werden, die eine Oberflächeneigenschaft einer Straße oder eines Wegs charakterisieren. Unter Ländern werden insbesondere Staaten verstanden. Unter Außentemperaturen werden vorzugsweise Temperaturen am Boden der Erde verstanden, die vorzugsweise nicht von Sonneneinstrahlung beeinflusst sind. Insbesondere kann unter einer Außentemperatur eine Lufttemperatur in bodennaher Atmosphäre verstanden sein, die weder durch Sonneneinstrahlung noch durch Bodenwärme beeinflusst ist. Unter Außenschneezuständen kann beispielsweise die Höhe von Schnee verstanden werden, mit der der Boden der Erde mit Schnee bedeckt ist.

Eine vorteilhafte Ausgestaltung des Systems zeichnet sich dadurch aus, dass die Verarbeitungseinheit konfiguriert ist, ein Positionssignal zu empfangen, dass eine auf das Kraftfahrzeug bezogene, geographische Position repräsentiert, wobei die Verarbeitungseinheit konfiguriert ist, die Referenz-Reifentypdaten zumindest basierend auf dem empfangenen Positionssignal und der Anforderungsdatenbank zu bestimmen. Vorzugsweise weist die Verarbeitungseinheit eine Signalempfangsschnittstelle auf, mittels der das Positionssignal empfangbar ist. Die von der Verarbeitungseinheit empfangbare geographische Position gibt beispielsweise die Position des Kraftfahrzeugs an. Mittels dieser empfangenen geographischen Position kann die Verarbeitungseinheit beispielsweise mittels der Anforderungsdatenbank einen Abgleich mit den dort hinterlegten geographischen Positionen ausführen, bis die am besten übereinstimmende geographische Position in der Anforderungsdatenbank gefunden ist, so dass die Verarbeitungseinheit dazu konfiguriert und/oder ausgebildet ist, um die entsprechende Reifentypanforderung aus der Anforderungsdatenbank auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Positionssignal zwar grundsätzlich die tatsächliche Position des Kraftfahrzeugs repräsentieren kann, es ist jedoch auch möglich, dass das empfangene Positionssignal eine Zielposition für das Kraftfahrzeug oder eine Position in einem vorbestimmten Abstand zu dem Kraftfahrzeug repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise eine Zielposition mittels des Positionssignals empfangen.

Eine vorteilhafte Ausgestaltung des Systems zeichnet sich dadurch aus, dass die Verarbeitungseinheit konfiguriert ist, ein Zeitsignal zu empfangen, dass eine Uhrzeit repräsentiert, wobei die Verarbeitungseinheit konfiguriert ist, die Referenz-Reifentypdaten zumindest basierend auf dem empfangenen Zeitsignal und der Anforderungsdatenbank zu bestimmen. Auf die vorangegangenen Erläuterungen bezüglich des Empfangs des Positionssignals wird in analoger Weise für den Empfang des Zeitsignals Bezug genommen. Mittels der entsprechenden Signalempfangsschnittstelle kann die Verarbeitungseinheit also das Zeitsignal empfangen. Bezüglich der Bestimmung der Referenz-Reifentypdaten wird ebenfalls in analoger Weise auf die vorangegangenen Erläuterungen in analoger Weise für die Bestimmung der Referenz-Reifentypdaten basierend auf dem empfangenen Zeitsignal und der Anforderungsdatenbank Bezug genommen. An dieser Stelle sei darauf hingewiesen, dass die Bestimmung basierend auf dem empfangenen Zeitsignal ausgeführt werden kann. Grundsätzlich ist es jedoch auch möglich, dass die Bestimmung der Referenz-Reifentypdaten auch auf anderen Signalen, beispielsweise einer Kombination aus dem empfangenen Zeitsignal und dem empfangenen Positionssignal sowie basierend auf der Anforderungsdatenbank erfolgen kann. Entsprechendes kann auch im Hinblick auf die Datumsangaben, die Straßenzustände, die Länder, die Außentemperaturen und/oder die Außenschneezustände bzw. die entsprechenden Signale gelten.

Eine vorteilhafte Ausgestaltung des Systems zeichnet sich dadurch aus, dass die Verarbeitungseinheit konfiguriert ist, ein Datumssignal zu empfangen, dass ein Datum, insbesondere ein auf das Kraftfahrzeug bezogenes Datum, repräsentiert, wobei die Verarbeitungseinheit konfiguriert ist, die Referenz-Reifentypdaten zumindest basierend auf dem empfangenen Datumssignal und der Anforderungsdatenbank zu bestimmen. Vorzugsweise weist die Verarbeitungseinheit die Signalempfangsschnittstelle auf, mittels der das Datumssignal empfangbar ist. Das von der Verarbeitungseinheit empfangbare Datum gibt beispielsweise das aktuelle Datum an. Über das Datum kann die Verarbeitungseinheit beispielsweise mittels der Anforderungsdatenbank einen Abgleich mit den dort hinterlegten Datumsangaben ausführen, bis das am besten übereinstimmende Datum in der Anforderungsdatenbank gefunden ist, so dass die Verarbeitungseinheit dazu konfiguriert und/oder ausgebildet ist, um die entsprechende Reifentypanforderung aus der Anforderungsdatenbank auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Datumssignal zwar grundsätzlich das tatsächliche Datum für das Kraftfahrzeug repräsentieren kann, es ist jedoch auch möglich, dass das empfangene Datumssignal ein Datum nach dem Abschluss einer vorbestimmten Fahrt mit dem Kraftfahrzeug zu einer Zielposition repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise die Zielposition mittels des Positionssignals empfangen.

Eine vorteilhafte Ausgestaltung des Systems zeichnet sich dadurch aus, dass die Verarbeitungseinheit konfiguriert ist, ein Straßensignal zu empfangen, dass einen Straßenzustand, insbesondere einer von dem Fahrzeug befahrenen Straße, repräsentiert, wobei die Verarbeitungseinheit konfiguriert ist, die Referenz-Reifentypdaten zumindest basierend auf dem empfangenen Straßensignal und der Anforderungsdatenbank zu bestimmen. Vorzugsweise weist die Verarbeitungseinheit eine Signalempfangsschnittstelle auf, mittels der das Straßensignal empfangbar ist. Der von der Verarbeitungseinheit empfangbare Straßenzustand gibt beispielsweise eine messbare Eigenschaft einer Straße an, beispielsweise die Oberflächeneinheit. Mit Hilfe des empfangenen Straßenzustands kann die Verarbeitungseinheit beispielsweise mittels der Anforderungsdatenbank einen Abgleich mit den dort hinterlegten Straßenzuständen ausführen, bis der am besten übereinstimmende Straßenzustand in der Anforderungsdatenbank gefunden ist, so dass die Verarbeitungseinheit dazu konfiguriert und/oder ausgebildet ist, um die entsprechende Reifentypanforderung aus der Anforderungsdatenbank auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Straßensignal zwar grundsätzlich Straßenzustände repräsentieren kann, es ist jedoch auch möglich, dass das empfangene Straßensignal einen Straßenzustand repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise eine Zielposition mittels des Positionssignals empfangen.

Eine vorteilhafte Ausgestaltung des Systems zeichnet sich dadurch aus, dass die Verarbeitungseinheit konfiguriert ist, ein Territorialsignal zu empfangen, dass ein Land für die Verwendung des Kraftfahrzeugs repräsentiert, wobei die Verarbeitungseinheit konfiguriert ist, die Referenz-Reifentypdaten zumindest basierend auf dem empfangenen Territorialsignal und der Anforderungsdatenbank zu bestimmen. Vorzugsweise weist die Verarbeitungseinheit eine Signalempfangsschnittstelle auf, mittels der das Territorialsignal empfangbar ist. Das von der Verarbeitungseinheit empfangbare Territorialsignal gibt beispielsweise das Land an, in dem sich das Fahrzeug befindet. Über diese Angabe des Landes kann die Verarbeitungseinheit beispielsweise mittels der Anforderungsdatenbank einen Abgleich mit den dort hinterlegten Ländern ausführen, bis das am besten übereinstimmende Land in der Anforderungsdatenbank gefunden sind, so dass die Verarbeitungseinheit dazu konfiguriert und/oder ausgebildet ist, um die entsprechende Reifentypanforderung aus der Anforderungsdatenbank für dieses Land auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Territorialsignal zwar grundsätzlich eine Angabe über das Land repräsentieren kann, indem das Fahrzeug derzeit ist, es ist jedoch auch möglich, dass das empfangene Territorialsignal ein Land zu einer Zielposition repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise eine Zielposition mittels des Positionssignals empfangen.

Eine vorteilhafte Ausgestaltung des Systems zeichnet sich dadurch aus, dass die Verarbeitungseinheit konfiguriert ist, ein Temperatursignal zu empfangen, dass eine auf das Kraftfahrzeug bezogene Temperatur repräsentiert, wobei die Verarbeitungseinheit konfiguriert ist, die Referenz-Reifentypdaten zumindest basierend auf dem empfangenen Temperatursignal und der Anforderungsdatenbank zu bestimmen. Vorzugsweise weist die Verarbeitungseinheit eine Signalempfangsschnittstelle auf, mittels der das Temperatursignal empfangbar ist. Das von der Verarbeitungseinheit empfangbare Temperatursignal gibt beispielsweise die Außentemperatur in der Umgebung zum Kraftfahrzeug an. Mit Hilfe dieser empfangenen Temperatur kann die Verarbeitungseinheit beispielsweise mittels der Anforderungsdatenbank einen Abgleich mit den dort hinterlegten Temperaturen ausführen, bis die am besten übereinstimmende Temperatur in der Anforderungsdatenbank gefunden ist, so dass die Verarbeitungseinheit dazu konfiguriert und/oder ausgebildet ist, um die entsprechende Reifentypanforderung aus der Anforderungsdatenbank auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Temperatursignal zwar grundsätzlich die tatsächliche Außentemperatur in der Umgebung zum Kraftfahrzeug repräsentieren kann, es ist jedoch auch möglich, dass das empfangene Temperatursignal eine Außentemperatur an einer Zielposition repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise eine Zielposition mittels des Positionssignals empfangen.

Eine vorteilhafte Ausgestaltung des Systems zeichnet sich dadurch aus, dass die Verarbeitungseinheit konfiguriert ist, ein Schneezustandssignal zu empfangen, dass einen Schneezustand, insbesondere in unmittelbare Nähe zum Kraftfahrzeug, repräsentiert, wobei die Verarbeitungseinheit konfiguriert ist, die Referenz-Reifentypdaten zumindest basierend auf dem empfangenen Schneezustandssignal und der Anforderungsdatenbank zu bestimmen. Vorzugsweise weist die Verarbeitungseinheit eine Signalempfangsschnittstelle auf, mittels der das Schneezustandssignal empfangbar ist. Das von der Verarbeitungseinheit empfangbare Schneezustandssignal gibt beispielsweise die Menge und/oder des Schnees auf der Erde an. Mit Hilfe dieses empfangenen Schneezustands kann die Verarbeitungseinheit beispielsweise mittels der Anforderungsdatenbank einen Abgleich mit den dort hinterlegten Schneezustände ausführen, bis der am besten übereinstimmende Schneezustand in der Anforderungsdatenbank gefunden ist, so dass die Verarbeitungseinheit dazu konfiguriert und/oder ausgebildet ist, um die entsprechende Reifentypanforderung aus der Anforderungsdatenbank auszulesen. Außerdem kann die Verarbeitungseinheit sodann basierend auf der ausgelesenen Reifentypanforderung die Referenz-Reifentypdaten erzeugen, die die Reifentypanforderung repräsentiert. Weiterhin ist darauf hinzuweisen, dass das empfangene Schneezustandssignal zwar grundsätzlich den tatsächlichen Schneezustand in unmittelbarer Nähe zum Kraftfahrzeug repräsentieren kann, es ist jedoch auch möglich, dass das empfangene Schneezustandssignal einen Schneezustand an einer Zielposition repräsentiert. Eine Zielposition kann beispielsweise eine Position sein, zu dem das Kraftfahrzeug, insbesondere mit Hilfe eines Navigationssystems, fahren soll. In diesem Fall kann die Verarbeitungseinheit beispielsweise eine Zielposition mittels des Positionssignals empfangen.

Eine vorteilhafte Ausgestaltung des Systems zeichnet sich dadurch aus, dass ein Eingangssignal mindestens zwei der folgenden Signale kombiniert: das Positionssignal, das Zeitsignal, das Datumssignal, das Straßensignal, das Territorialsignal, das Temperatursignal und das Schneezustandssignal, wobei die Verarbeitungseinheit konfiguriert ist, die jeweils kombinierten Signale über das Eingangssignal zu empfangen. Somit ist es beispielsweise möglich, dass die Verarbeitungseinheit ein Eingangssignal empfängt, wobei das Eingangssignal das Positionssignal und das Temperatursignal kombiniert. Das Positionssignal repräsentiert dabei eine auf das Kraftfahrzeug bezogene, geographische Position. Dies wurde bereits zuvor erläutert. Das Temperatursignal repräsentiert eine Außentemperatur. Auch dies wurde bereits zuvor erläutert. Somit können der Verarbeitungseinheit beide Signale bzw. beide entsprechenden Parameter zur Verfügung gestellt werden. Die Verarbeitungseinheit ist vorzugsweise dazu konfiguriert, die Referenz-Reifentypdaten zumindest basierend auf der Anforderungsdatenbank sowie auf den Parametern zu bestimmen, die mittels der empfangenen Signale repräsentiert sind, die von dem Eingangssignal kombiniert sind. Mit anderen Worten kann der Verarbeitungseinheit das Eingangssignal zur Verfügung gestellt werden, so dass von der Verarbeitungseinheit die entsprechenden Parameter in Kombination mit der Anforderungsdatenbank verwendet werden, um die Referenz-Reifentypdaten zu bestimmen.

Gemäß einem zweiten Aspekt der Erfindung wird die eingangs genannte Aufgabe gelöst durch ein Kraftfahrzeug, das eine Mehrzahl von Reifen und ein System aufweist, wie es zu dem ersten Aspekt der Erfindung, einer der zugehörigen, vorteilhaften Ausgestaltungen und/oder mit einem der vorteilhaften Merkmalen zuvor erläutert worden ist. Bezüglich des Systems wird also auf die vorteilhaften Erläuterungen, bevorzugten Merkmale, Effekte und/oder Vorteile in analoger Weise Bezug genommen, wie sie vorangehend für das System gemäß dem ersten Aspekt und/oder der vorteilhaften Ausgestaltungen erläutert worden sind. Außerdem ist es für das Kraftfahrzeug vorgesehen, dass der Sensor des Systems zu einem der Reifen derart angeordnet ist, so dass mittels des Sensors Reifentypdaten per Funk von einer drahtlosen Datenvorrichtung dieses Reifens empfangbar sind, wobei die Datenvorrichtung an diesem Reifen befestigt und/oder in diesen Reifen integriert ist. Indem das System nunmehr einen Teil des Kraftfahrzeugs bildet, und sofern einer der Reifen des Fahrzeugs eine Datenvorrichtung aufweist, ist es möglich, dass mittels des Systems die Reifentypdaten per Funk von der Datenvorrichtung dieses Reifens empfangbar sind. Dazu kann der Sensor beispielsweise derart in unmittelbarer Nähe zu dem jeweiligen Reifen angeordnet sein, sodass eine robuste und/oder sichere Funk-Datenübertragung von der Datenvorrichtung zu dem Sensor erfolgen kann. Wie zuvor im Zusammenhang mit dem System erläutert, kann sodann eine Überprüfung stattfinden, ob der tatsächliche Reifentyp des Reifens die jeweilige Reifentypanforderung erfüllt. Basierend auf dem Ergebnis dieser Auswertung bzw.

Überprüfung kann die Verarbeitungseinheit ein Arbeitssignal erzeugen, das indiziert, ob der Reifentyp des Reifens des Kraftfahrzeugs die Reifentypanforderung erfüllt. Dieses Arbeitssignal kann sodann von dem Fahrzeug weiter verarbeitet werden. Insbesondere kann das Kraftfahrzeug dazu ausgebildet und/oder konfiguriert sein, basierend auf dem Arbeitssignal weitere Signale zu erzeugen und/oder Anforderungen an den Fahrer des Kraftfahrzeugs zu senden.

Eine vorteilhafte Ausgestaltung des Kraftfahrzeugs zeichnet sich dadurch aus, dass das Kraftfahrzeug eine Steuereinheit aufweist, die konfiguriert ist, ein Arbeitssignal von der Verarbeitungseinheit des Systems zu empfangen, wobei die Steuereinheit konfiguriert und/oder ausgebildet ist, eine Warnmeldung optisch und/oder akustisch mittels einer gekoppelten Ausgabeeinheit in einem Fahrzeuginnenraum des Kraftfahrzeugs auszugeben, wenn das Arbeitssignal eine Warnung repräsentiert, dass der Reifentyp dieses Reifens des Kraftfahrzeugs nicht der Reifentypanforderung entspricht, die durch die Referenz-Reifentypdaten repräsentiert ist. Bezüglich der Übertragung des Arbeitssignals zwischen der Verarbeitungseinheit und der Steuereinheit wird auf die vorangegangenen Erläuterungen zumindest in analoger Weise und bevorzugt Bezug genommen. So kann die Verarbeitungseinheit das Arbeitssignal an die Steuereinheit übertragen. Das Arbeitssignal repräsentiert insbesondere dann eine Warnung, wenn der Reifentyp des Reifens, von dem der Sensor die Reifentypdaten erfasst hat, nicht der Reifentypanforderung genügt. Die Steuereinheit kann sodann mit der direkt und/oder indirekt gekoppelten Ausgabeeinheit eine Warnmeldung in dem Fahrzeuginnenraum ausgeben. Die Ausgabeeinheit kann dazu eine Anzeigeeinheit umfassen, die die Warnmeldung optisch ausgibt. Dabei kann die optische Ausgabe derart erfolgen, dass über die optische Warnmeldung der Reifen identifizierbar ist, dessen Reifentyp nicht der Reifentypanforderung entspricht. Diese Informationen werden also dem Fahrer des Kraftfahrzeugs optisch zur Verfügung gestellt. Darüber hinaus kann die Ausgabeeinheit ein Bauteil zur akustischen Ausgabe der Warnmeldung aufweisen. Hiermit kann die Warnmeldung also akustisch ausgegeben werden.

Eine vorteilhafte Ausgestaltung des Kraftfahrzeugs zeichnet sich dadurch aus, dass die Steuereinheit konfiguriert und/oder ausgebildet ist, mittels einer Navigationseinheit des Kraftfahrzeugs einen Zielort und/oder einen Routenvorschlag zu einer Werkstatt und/oder einem anderen Dienstleister optisch als Vorschlag auszugeben, wobei die Werkstatt und/oder der Dienstleister derart gewählt wird, dass bei diesem Dienstleister und/oder bei dieser Werkstatt eine Reparatur und/oder ein Wechsel eines Reifens möglich ist, wobei die Steuereinheit konfiguriert ist, das Navigationssystem zur Ausgabe und/oder zur Ermittlung des Vorschlags zu dem Zielort und/oder der Route zu steuern, wenn mittels der Verarbeitungseinheit bestimmt wurde, dass der Reifentyp eines Reifens nicht der Reifentypanforderung entspricht bzw. wenn die Steuereinheit ein Arbeitssignal erhält, das eine Warnung repräsentiert.

Weitere Merkmale, Vorteile und Anwendungsmöglichkeiten der vorliegenden Erfindung ergeben sich aus der nachfolgenden Beschreibung der Ausführungsbeispiele und den

Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

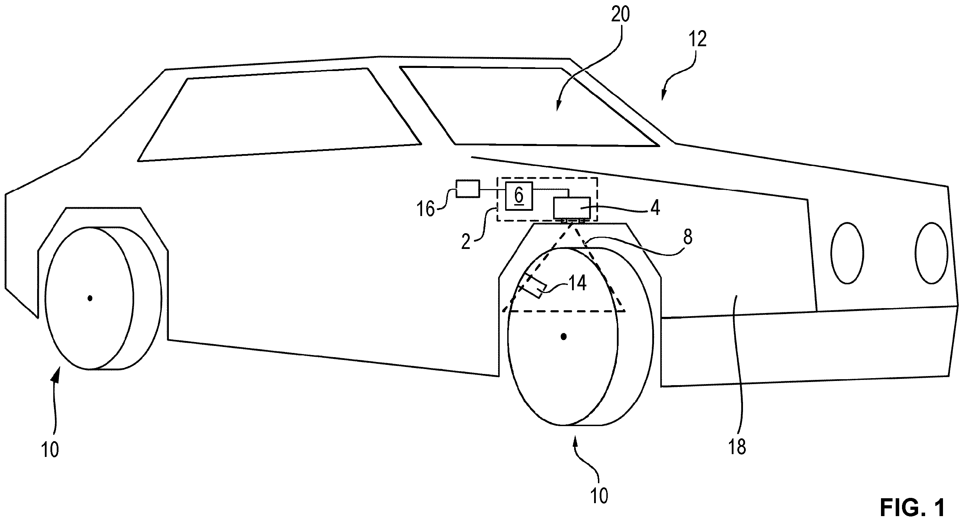

- Fig. 1: zeigt eine vorteilhafte Ausgestaltung eines Kraftfahrzeugs in einer schematischen Perspektivansicht

In der Figur 1 ist ein Kraftfahrzeug 12 schematisch dargestellt. Das Kraftfahrzeug 12 weist ein System 2 auf. Wenn im Weiteren das System 2 des Kraftfahrzeugs 12 erläutert wird, soll damit gleichzeitig auch die Erläuterung des Systems 2 unabhängig von dem Fahrzeug 12 gemeint sei. Mit anderen Worten gelten die folgenden Erläuterungen im Zusammenhang mit dem System 2 auch für den Fall, dass das System 2 separat und/oder einzeln handhabbar ausgestaltet ist.

Das System 2 dient zur Auswertung von Reifentypdaten und zur Erzeugung eines Arbeitssignals basierend auf dieser entsprechenden Auswertung bzw. dem Ergebnis der Auswertung. Das in der Figur 1 dargestellte Fahrzeug 12 weist mehrere Reifen 10 auf. Unter einem Reifen 10 ist vorzugsweise ein Kraftfahrzeugreifen zu verstehen. Das Kraftfahrzeug 12 kann beispielsweise ein Auto sein. Für die weitere Erläuterung soll auf den vorderen, dargestellten Reifen 1o eingegangen werden.

An einem Fahrzeug 12 können unterschiedliche Reifentypen eines Reifens 10 montiert sein. Reifentypen eines Reifens 10 können beispielsweise Winterreifen, Sommerreifen oder Ganzjahresreifen sein. Weitere Reifentypen sind außerdem möglich. Insbesondere in den Wintermonaten kann es in staatlichen Ländern Regelungen geben, dass Kraftfahrzeuge 12 nur verwendet werden dürfen, wenn die Reifen 10 des Kraftfahrzeugs 12 als Winterreifen ausgebildet sind. Mit anderen Worten kann es Anforderungen an die Reifentypen eines Kraftfahrzeugs 12 geben. Diese werden auch als Reifentypanforderungen bezeichnet. Andere Regelungen können ebenfalls Anforderungen an den Reifentyp eines Reifens 10 stellen. So kann es beispielsweise Reifentypanforderungen in Abhängigkeit von der Außentemperatur, den Straßenverhältnissen und/oder anderen Parametern geben. Für den Fahrer eines Fahrzeugs 12 ist es deshalb wünschenswert, überprüfen zu können, insbesondere automatisch überprüfen zu können, ob die an dem Fahrzeug 12 montierten Reifen 10 einer Reifentypanforderung jeweils genügen.

Das System 2 dient vorzugsweise zur Überprüfung bzw. Auswertung, ob der tatsächliche Reifentyp eines Reifens 10 einer insbesondere vorbestimmten Reifentypanforderung genügt. Dazu weist das System 2 einen Sensor 4 und eine Verarbeitungseinheit 6 auf. Der Sensor 4 und die Verarbeitungseinheit 6 können als eine gemeinsame, integrale Einheit ausgebildet sein. Es ist jedoch auch möglich, dass der Sensor 4 und die Verarbeitungseinheit 6 getrennt voneinander ausgebildet sind, wobei der Sensor 4 über eine Datenverbindung mit der Verarbeitungseinheit 6 verbunden sein kann. Der Sensor 4 ist ausgebildet, derart angeordnet zu werden, so dass ein Sensorbereich 8 des Sensors 4 den Reifen 10 des Kraftfahrzeugs 12 erfassen kann. Insbesondere ist es bevorzugt vorgesehen, dass der Sensor 4 ausgebildet ist, derart angeordnet zu werden, so dass der Sensorbereich 8 zumindest einen Teil des Reifens 10 erfassen kann. Außerdem ist der Sensor 4 ausgebildet, Reifentypdaten per Funk von einer Datenvorrichtung 14 des Reifens 10 zu erfassen. Die Datenvorrichtung 14 ist vorzugsweise dazu ausgebildet, die dem Reifen 10 zugeordneten, tatsächlichen Reifentypdaten zu speichern. Die Reifentypdaten repräsentieren dabei den tatsächlichen Reifentyp des Reifens 10. Außerdem ist die Datenvorrichtung 14 dazu ausgebildet und/oder konfiguriert, über eine Funkschnittstelle die Reifentypdaten zur Verfügung zu stellen, insbesondere derart, dass der Sensor 4 die Reifentypdaten per Funk von der Datenvorrichtung 14 abrufen kann. Dies ist ein Beispiel für die Erfassung der Reifentypdaten per Funk von der Datenvorrichtung 14 mittels des Sensors 4. Die Datenvorrichtung 14 ist vorzugsweise an dem Reifen 10 befestigt. Hierbei kann es sich um eine stoffschlüssige Befestigung und/oder eine formschlüssige Befestigung handeln. Vorzugsweise ist die Datenvorrichtung 14 beispielsweise an einer Innenseite des Reifens 10 kraftschlüssig und/oder formschlüssig befestigt. Alternativ oder ergänzend kann es vorgesehen sein, dass die Datenvorrichtung 14 zumindest teilweise in den Reifen 10 integriert ist. So kann die Datenvorrichtung 14 beispielsweise in das Material des Reifens 10 zumindest teilweise eingebettet sein.

Wie es beispielhaft aus der Figur 1 zu erkennen ist, kann das System 2 einen Teil des Fahrzeugs 12 bilden. Dabei kann zumindest der Sensor 4 des Systems 2 derart relativ zu dem Reifen 10 angeordnet sein, dass der Sensorbereich 8 des Sensors 4 den Reifen 10 vollständig oder zumindest teilweise erfasst. Damit wird gewährleistet, dass zwischen der Datenvorrichtung 14 des Reifens 10 und dem Sensor 4 eine Funkverbindung hergestellt werden kann, mittels der die Reifentypdaten per Funk von der Datenvorrichtung 14 an den Sensor 4 übertragbar sind. Mit anderen Worten kann der Sensor 4 somit die Reifentypdaten per Funk von der Datenvorrichtung 14 erfassen. Insbesondere kann der Sensor 4 beispielsweise im Bereich des Kotflügels 18 des Fahrzeugs 12 befestigt sein.

Die Verarbeitungseinheit 6 erhält die von dem Sensor 4 erfassten Reifentypdaten. Dazu können die Verarbeitungseinheit 6 und/oder der Sensor 4 entsprechend ausgebildet und/oder konfiguriert sein. Außerdem ist die Verarbeitungseinheit 6 konfiguriert, die Reifentypdaten in Bezug zu Referenz-Reifentypdaten auszuwerten. Die Referenz-Reifentypdaten repräsentieren eine Reifentypanforderung. Die Referenz-Reifentypdaten können beispielsweise vorbestimmt, insbesondere vorberechnet und/oder vorermittelt, sein. In diesem Zusammenhang wird auf die vorangegangene Erläuterung bezüglich der Vorbestimmung der Referenz-Reifentypdaten verwiesen. Es ist jedoch auch möglich, dass die Verarbeitungseinheit 6 die Referenz-Reifentypdaten von einer Steuereinheit 16 des Fahrzeugs 12 abrufen kann. In diesem Fall kann eine Signalverbindung zwischen der Steuereinheit 16 des Fahrzeugs 12 und der Verarbeitungseinheit 6 des Systems 2 zumindest lösbar hergestellt sein. Die Steuereinheit 16 des Fahrzeugs 12 kann dazu ausgebildet und/oder konfiguriert sein, die Referenz-Reifentypdaten abrufbar zur Verfügung zu stellen. Es kann jedoch auch bevorzugt vorgesehen sein, dass die Verarbeitungseinheit 6 einen Speicher aufweist, von dem die Referenz-Reifentypdaten gespeichert sind.

Wie zuvor erläutert, ist die Verarbeitungseinheit 6 konfiguriert, die mittels des Sensors 4 erfassten Reifentypdaten in Bezug zu oder basierend auf den Referenz-Reifentypdaten auszuwerten. Die Auswertung kann dabei beispielsweise einen Vergleich der erfassten Reifentypdaten mit den Referenz-Reifentypdaten umfassen und/oder dadurch bestimmt sein. So können die Reifentypdaten beispielsweise direkt mit den Referenz-Reifentypdaten verglichen werden, so dass das Vergleichsergebnis beispielsweise entweder lauten kann, dass die Reifentypdaten den Referenz-Reifentypdaten entsprechen oder dass die Reifentypdaten nicht den Referenz-Reifentypdaten entsprechen. Dies sind zwei mögliche Ergebnisse der entsprechenden Auswertung bzw. des Vergleichs.

Darüber hinaus ist die Verarbeitungseinheit 6 konfiguriert, ein Arbeitssignal basierend auf dem Ergebnis der Auswertung zu erzeugen. Hierbei handelt es sich um die Auswertung mittels der Verarbeitungseinheit 6, wie sie zuvor beispielhaft erläutert wurde. Das Arbeitssignal indiziert und/oder repräsentiert dabei, ob der tatsächliche Reifentyp des Reifens 10 des Kraftfahrzeugs 12 die Reifentypanforderung erfüllt, wie sie durch die Referenz-Reifentypdaten repräsentiert ist. So kann das Arbeitssignal beispielsweise indizieren bzw. repräsentieren, dass der tatsächliche Reifentyp des Reifens 10 die Reifentypanforderung erfüllt, oder das Arbeitssignal kann indizieren bzw. repräsentieren, dass der tatsächliche Reifentyp des Reifens 10 die Reifentypanforderung nicht erfüllt.

Die Verarbeitungseinheit 6 kann dazu ausgebildet und/oder konfiguriert sein, das Arbeitssignal an die Steuereinheit 16 des Fahrzeugs 12 zu übertragen. Dazu kann die zuvor genannte Signalverbindung zwischen der Verarbeitungseinheit 6 und der Steuereinheit 16 dienen.

Die Steuereinheit 16 kann zur Auswertung und/oder zur Ausführung von weiteren Verfahrensschritten basierend auf dem Arbeitssignal ausgebildet sein.

So kann es beispielsweise vorgesehen sein, dass die Verarbeitungseinheit 6 dazu konfiguriert und/oder ausgebildet ist, das Arbeitssignal derart zu erzeugen, dass das Arbeitssignal eine Warnung repräsentiert, wenn der tatsächliche Reifentyp des Reifens 10 des Kraftfahrzeugs 12 nicht der Reifentypanforderung genügt. Die Warnung gibt also darüber Auskunft, dass der Reifen 10 gegen einen anderen Reifen 10 geforderten Reifentyps zu wechseln ist. Wird dieses Arbeitssignal an die Steuereinheit 16 gesendet, so kann die Steuereinheit 16 dieses Arbeitssignal verwenden, um eine Warnmeldung an den Fahrer des Fahrzeugs 12 zu senden.

So kann die Steuereinheit 16 dazu konfiguriert und/oder ausgebildet sein, zunächst das Arbeitssignal von der Verarbeitungseinheit 6 zu empfangen. Außerdem kann die Steuereinheit 16 dazu konfiguriert und/oder ausgebildet sein, die Warnmeldung optisch und/oder akustisch mittels einer mit der Steuereinheit 16 direkt oder indirekt gekoppelten Ausgabeeinheit in einem Fahrzeuginnenraum 20 des Kraftfahrzeugs 12 auszugeben, wenn das Arbeitssignal die Warnung repräsentiert.

Eine vorteilhafte Ausgestaltung der Datenvorrichtung 14 des Reifens 10 ist beispielsweise ein sogenannter RFID-Tag. Von diesem RFID-Tag als Datenvorrichtung 14 können die tatsächlichen Reifentypdaten des Reifens 10 sowie weitere Daten, beispielsweise eine Identifikationsnummer des Reifens 10, gespeichert sein. Der Sensor 4 kann dazu ausgebildet und/oder konfiguriert sein, auch die weiteren Daten per Funk von der Datenvorrichtung 14 zu erfassen. Dies gilt insbesondere dann, wenn die Datenvorrichtung 14 als der RFID-Tag ausgebildet ist. Diese weiteren Daten können darüber hinaus von dem Sensor 4 an die Verarbeitungseinheit 6 übertragen werden. Dazu kann insbesondere die Datenverbindung zwischen dem Sensor 4 und der Verarbeitungseinheit 6 dienen. Außerdem kann es bevorzugt vorgesehen sein, dass das Arbeitssignal, das von der Verarbeitungseinheit 6 erzeugt werden kann, auch die weiteren Daten, die mittels des Sensors 4 von der Datenvorrichtung 14 erfassbar sind, repräsentiert. Wird das Arbeitssignal entsprechend an die Steuereinheit 16 übertragen, so kann auch die Steuereinheit 16 diese weiteren Informationen erhalten. Die Steuereinheit 16 kann dazu ausgebildet und/oder konfiguriert sein, dem Fahrer ein den jeweiligen Reifen 10 identifizierbares, optisches Signal zur Verfügung zu stellen, das im Zusammenhang mit der Warnmeldung ausgegeben werden kann. Mit anderen Worten kann mittels der Steuereinheit 16 und der mit der Steuereinheit 16 direkt oder indirekt gekoppelten Ausgabeeinheit ein optisches Signal in dem Fahrzeuginnenraum 20 ausgegeben werden, das es dem Fahrer ermöglicht, einerseits die Notwendigkeit der Überprüfung des Reifens 10 aufgrund der nicht der Anforderung entsprechenden Reifentypeigenschaft aufzeigt und andererseits die Information zur Verfügung stellt, welcher der Reifen 10 des Fahrzeugs 12 davon betroffen ist.

Außerdem hat es sich als vorteilhaft herausgestellt, wenn von der Verarbeitungseinheit 6 oder einem zugeordneten Speicher eine Anforderungsdatenbank gespeichert ist, auf die die Verarbeitungseinheit 6 zugreifen kann. Es kann jedoch auch möglich sein, dass die Anforderungsdatenbank von der Steuereinheit 16 des Fahrzeugs 12 oder von einem der Steuerungseinheit 16 zugeordneten Speicher gespeichert ist. Sofern die Anforderungsdatenbank direkt oder indirekt von der Steuerungseinheit 16 gespeichert ist, kann es vorgesehen sein, dass die Verarbeitungseinheit 6 des Systems 2 über eine Signalverbindung zu der Steuerungseinheit 16 auf die entsprechende Anforderungsdatenbank zugreifen kann.

Außerdem kann die Verarbeitungseinheit 6 dazu konfiguriert sein, Referenz-Reifentypdaten mittels der Anforderungsdatenbank zu bestimmen, vorzugsweise zu ermitteln und/oder zu berechnen. Dies kann erfolgen, bevor die tatsächlichen Reifentypdaten per Funk von der Datenvorrichtung 14 des Reifens 10 mittels des Sensors 4 erfasst werden. Mit anderen Worten kann es vorgesehen sein, dass die Referenz-Reifentypdaten mittels der Anforderungsdatenbank von der Verarbeitungseinheit 6 vorbestimmt bzw. vorermittelt oder vorerrechnet sind.

Die Anforderungsdatenbank repräsentiert Reifentypanforderungen vorzugsweise in Abhängigkeit von mindestens einem der folgenden Parameter: geographische Positionen, Uhrzeiten, Datumsangaben, Straßenzustände, Länder, Außentemperaturen und/oder Außenschneezustände. Rein beispielhaft soll angenommen werden, dass die Anforderungsdatenbank Reifentypanforderungen in Abhängigkeit von Außentemperaturen repräsentiert. So kann beispielsweise für Außentemperaturen von 7 Grad Celsius oder einer geringeren Temperatur Winterreifen als Reifentypanforderung von der Anforderungsdatenbank gespeichert bzw. den Außentemperaturen zugeordnet sein. Bei Temperaturen, die höher als 7 Grad Celsius sind, kann die Reifentypanforderung beispielsweise beliebig oder Sommerreifen sein.

Die Verarbeitungseinheit 6 kann dazu konfiguriert und/oder ausgebildet sein, ein Temperatursignal zu empfangen, das eine tatsächliche Außentemperatur repräsentiert. So kann beispielsweise ein Außentemperatursensor mit der Verarbeitungseinheit 6 direkt oder indirekt gekoppelt sein, um ein von dem Außentemperatursensor bereitgestelltes Temperatursignal an die Verarbeitungseinheit 6 zu übertragen. Grundsätzlich ist es auch möglich, dass dieser Temperatursensor der Verarbeitungseinheit 6 zugeordnet ist. Alternativ oder ergänzend kann es vorgesehen sein, dass das Temperatursignal von der Steuereinheit 16 über die Signalverbindung an die Verarbeitungseinheit 6 übertragen wird. In diesem Fall kann der Steuereinheit 16 die Informationen über die Außentemperatur vorliegen haben. Dies ist bei Kraftfahrzeugen 12 oftmals der Fall. Denn Kraftfahrzeuge 12 weisen oftmals einen Außentemperatursensor auf. Ein entsprechendes Temperatursignal kann direkt und/oder indirekt von dem Außentemperatursensor an die Steuereinheit 16 übertragen werden. Dieses Temperatursignal kann u. a. - wie zuvor erwähnt - an die Verarbeitungseinheit 6 übertragen werden. Die Verarbeitungseinheit 6 kann außerdem dazu ausgebildet und/oder konfiguriert sein, die Referenz-Reifentypdaten zumindest (auch) basierend auf dem empfangenen Temperatursignal und der Anforderungsdatenbank zu bestimmen. Das empfangene Temperatursignal repräsentiert eine tatsächliche Außentemperatur. Die Verarbeitungseinheit 6 kann mittels der Anforderungsdatenbank eine darin hinterlegte Außentemperatur auffinden, die zu der tatsächlichen Außentemperatur korrespondiert. Zu dieser aufgefundenen Außentemperatur ist in der Anforderungsdatenbank eine Reifentypanforderung hinterlegt. Mittels dieser hinterlegten Reifentypanforderung können mittels der Verarbeitungseinheit 6 entsprechende Referenz-Reifentypdaten erzeugt werden, die diese Reifentypanforderung repräsentiert. Diese Bestimmung der Referenz-Reifentypdaten kann erfolgen, bevor, zeitgleich zu oder während der Sensor 4 die Reifentypdaten per Funk von der Datenvorrichtung 14 des Sensors 4 ausliest. Sodann liegen der Verarbeitungseinheit 6 sowohl die ausgelesenen, dem Reifen 10 zugeordnete Reifentypdaten sowie die Referenz-Reifentypdaten vor. Die Verarbeitungseinheit 6 kann deshalb nunmehr die Auswertung der Reifentypdaten bezogen zu oder basierend auf den Referenz-Reifentypdaten ausführen und basierend hierauf ein Arbeitssignal erzeugen, das indiziert oder repräsentiert, ob der tatsächliche Reifentyp des Reifens 10 des Kraftfahrzeugs 12 die zuvor mittels der Anforderungsdatenbank bestimmten Reifentypanforderung erfüllt. Mit anderen Worten können in dem konkreten Beispiel die per Funk von der Datenvorrichtung 14 erfassten Reifentypdaten beispielsweise den tatsächlichen Reifentyp des Reifens 10 als Winterreifen spezifizieren. Sind die Außentemperaturen beispielsweise kleiner als 7 Grad, so ist die Reifentypanforderung ebenfalls als Winterreifen spezifiziert. Werden nun die Reifentypdaten mit den Referenz-Reifentypdaten mittels der Verarbeitungseinheit 6 zur Auswertung verglichen, so wird das Ergebnis lauten, dass die tatsächlich festgestellten Winterreifen der Anforderung an den Reifentyp für den Reifen 10 erfüllen, was durch das Arbeitssignal indiziert bzw. repräsentiert wird. Wäre der Reifen 10 hingegen ein Sommerreifen, so würde dieser die Anforderungen an den Reifentyp nicht erfüllen, was zur Folge hätte, dass die Verarbeitungseinheit 6 ein Arbeitssignal erzeugt, das eine Warnung repräsentiert. Sodann könnte die Steuereinheit 16 eine entsprechende Warnmeldung in den Fahrzeuginnenraum 20 des Fahrzeugs 12 erzeugen, was dem Fahrer die Möglichkeit gibt, auf diese Situation aufmerksam zu werden. Außerdem kann die Warnmeldung die Information enthalten, welcher der Reifen 10 des Fahrzeugs 12 betroffen ist, bei dem die Reifentypanforderung nicht erfüllt ist. Schließlich kann der Fahrer über eine Navigationseinheit des Fahrzeugs 12 einen Vorschlag für einen Weg zu oder einen Ort einer Werkstatt bzw. eines Dienstleisters erhalten, bei dem der entsprechende Reifen 10 gegen einen Reifen 10 ausgetauscht werden kann, der die Reifentypanforderung erfüllt.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- 2: System
- 4: Sensor
- 6: Verarbeitungseinheit
- 8: Sensorbereich
- 10: Reifen
- 12: Kraftfahrzeug
- 14: Datenvorrichtung
- 16: Steuereinheit
- 18: Kotflügel
- 20: Fahrzeuginnenraum

## Patentansprüche

1. System (2) zur Auswertung von Reifentypdaten, aufweisend:
einen Sensor (4), und
eine Verarbeitungseinheit (6);
wobei Sensor (4) zur Anordnung derart ausgebildet ist, so dass ein Sensorbereich (8) des Sensors (4) mindestens einen Teil eines Reifens (10) eines Kraftfahrzeugs (12) erfasst;
wobei der Sensor (4) ausgebildet ist, Reifentypdaten per Funk von einer Datenvorrichtung (14) zu erfassen, die an dem Reifen (10) des Kraftfahrzeugs (12) befestigt und/oder in den Reifen (10) integriert ist, wobei die Reifentypdaten den Reifentyp des Reifens (10) repräsentieren;
wobei die Verarbeitungseinheit (6) konfiguriert ist, die Reifentypendaten in Bezug zu Referenz-Reifentypdaten auszuwerten, wobei die Referenz-Reifentypdaten eine Reifentypanforderung repräsentieren; und
wobei die Verarbeitungseinheit (6) konfiguriert ist, ein Arbeitssignal basierend auf einem Ergebnis der Auswertung zu erzeugen, wobei das Arbeitssignal indiziert, ob der Reifentyp des Reifens (10) des Kraftfahrzeugs (12) die Reifentypanforderung erfüllt, die durch die Referenz-Reifentypdaten repräsentiert ist.

2. System (2) nach dem vorhergehenden Anspruch, wobei die Verarbeitungseinheit (6) konfiguriert ist, das Arbeitssignal derart zu erzeugen, dass das Arbeitssignal eine Warnung repräsentiert, wenn der Reifentyp des Reifens (10) des Kraftfahrzeugs (12) nicht der Reifentypanforderung genügt, die durch die Referenz-Reifentypdaten repräsentiert ist.

3. System (2) nach dem vorhergehenden Anspruch, wobei die Verarbeitungseinheit (6) konfiguriert ist, das Arbeitssignal an eine Steuereinheit (16) des Kraftfahrzeugs (12) zu senden.

4. System (2) nach einem der vorhergehenden Ansprüche, wobei die Referenz-Reifentypdaten von der Verarbeitungseinheit (6) gespeichert, abrufbar und/oder vorbestimmt sind.

5. System (2) nach einem der vorhergehenden Ansprüche, wobei die Verarbeitungseinheit (6) konfiguriert ist, um die Referenz-Reifentypendaten mittels einer Anforderungsdatenbank zu bestimmen, wobei die Anforderungsdatenbank Reifentypanforderungen in Abhängigkeit von mindestens einem der folgenden Parameter repräsentiert: geographische Positionen, Uhrzeiten, Datumsangaben, Straßenzustände, Länder, Außentemperaturen und Außenschneezustände.

6. System (2) nach dem vorhergehenden Anspruch, wobei die Verarbeitungseinheit (6) konfiguriert ist, ein Positionssignal zu empfangen, das eine auf das Kraftfahrzeug (12) bezogene, geographische Position repräsentiert, wobei die Verarbeitungseinheit (6) konfiguriert ist, die Referenz-Reifentypdaten zumindest basierend auf dem empfangenen Positionssignal und der Anforderungsdatenbank zu bestimmen.

7. System (2) nach einem der vorangehenden Ansprüche 5 bis 6, wobei die Verarbeitungseinheit (6) so konfiguriert ist, ein Zeitsignal zu empfangen, das eine Uhrzeit repräsentiert, wobei die Verarbeitungseinheit (6) konfiguriert ist, die Referenz-Reifentypdaten zumindest basierend auf dem empfangenen Zeitsignal und der Anforderungsdatenbank zu bestimmen.

8. System (2) nach einem der vorangehenden Ansprüche 5 bis 7, wobei die Verarbeitungseinheit (6) so konfiguriert ist, ein Datumssignal zu empfangen, das ein Datum repräsentiert, wobei die Verarbeitungseinheit (6) konfiguriert ist, die Referenz-Reifentypdaten zumindest basierend auf dem empfangenen Datumssignal und der Anforderungsdatenbank zu bestimmen.

9. System (2) nach einem der vorangehenden Ansprüche 5 bis 8, wobei die Verarbeitungseinheit (6) so konfiguriert ist, ein Straßensignal zu empfangen, das einen Straßenzustand repräsentiert, wobei die Verarbeitungseinheit (6) konfiguriert ist, die Referenz-Reifentypdaten zumindest basierend auf dem empfangenen Straßensignal und der Anforderungsdatenbank zu bestimmen.

10. System (2) nach einem der vorangehenden Ansprüche 5 bis 9, wobei die Verarbeitungseinheit (6) konfiguriert ist, ein Territorialsignal zu empfangen, das ein Land für eine Verwendung des Kraftfahrzeugs (12) repräsentiert, wobei die Verarbeitungseinheit (6) konfiguriert ist, die Referenz-Reifentypdaten zumindest basierend auf dem empfangenen Territorialsignal und der Anforderungsdatenbank zu bestimmen.

11. System (2) nach einem der vorangehenden Ansprüche 5 bis 10, wobei die Verarbeitungseinheit (6) konfiguriert ist, ein Temperatursignal zu empfangen, das eine Außentemperatur repräsentiert, wobei die Verarbeitungseinheit (6) konfiguriert ist, die Referenz-Reifentypdaten zumindest basierend auf dem empfangenen Temperatursignal und der Anforderungsdatenbank zu bestimmen.

12. System (2) nach einem der vorangehenden Ansprüche 5 bis 11, wobei die Verarbeitungseinheit (6) konfiguriert ist, ein Schneezustandssignal zu empfangen, das einen Außenschneezustand repräsentiert, wobei die Verarbeitungseinheit (6) konfiguriert ist, die Referenz-Reifentypdaten zumindest basierend auf dem empfangenen Schneezustandssignal und der Anforderungsdatenbank zu bestimmen.

13. System (2) nach einem der vorangehenden Ansprüche 6 bis 12, wobei ein Eingangssignal mindestens zwei der folgenden Signale kombiniert: das Positionssignal, das Zeitsignal, das Datumssignal, des Straßensignals, das Territorialsignals, das Temperatursignal und das Schneezustandssignal, wobei die Verarbeitungseinheit (6) konfiguriert ist, die jeweils kombinierten Signale über das Eingangssignal zu empfangen.

14. Kraftfahrzeug (12), aufweisend:
eine Mehrzahl von Reifen (10); und
ein System (2) nach einem der vorhergehenden Ansprüche;
wobei der Sensor (4) des Systems zu einem der Reifen (10) derart angeordnet ist, so dass mittels des Sensors (4) Reifentypdaten per Funk von einer drahtlosen Datenvorrichtung (14) dieses Reifens (10) empfangbar sind, wobei die Datenvorrichtung (14) an diesem Reifen (10) befestigt und/oder in diesen Reifen (10) integriert ist.

15. Kraftfahrzeug (12) nach dem vorhergehenden Anspruch, wobei das Kraftfahrzeug (12) eine Steuereinheit (16) aufweist, die konfiguriert ist, ein Arbeitssignal von der Verarbeitungseinheit (6) des Systems (2) zu empfangen, und wobei die Steuereinheit (16) konfiguriert und/oder ausgebildet ist, eine Warnmeldung optisch und/oder akustisch mittels einer gekoppelten Ausgabeeinheit in einem Fahrzeuginnenraum (20) des Kraftfahrzeugs (12) auszugeben, wenn das Arbeitssignal eine Warnung repräsentiert, dass der Reifentyp dieses Reifens (10) des Kraftfahrzeugs (12) nicht der Reifentypanforderung entspricht, die durch die Referenz-Reifentypdaten repräsentiert ist.
